# EUROPEAN PATENT SPECIFICATION

(11) **EP 2 658 149 B1**
(45) Date of publication and mention of the grant of the patent: **11.03.2015**
(21) Application number: 11853349.6
(22) Date of filing: 16.11.2011
(51) Int. Cl.: H04L 12/24, H04L 12/703, H04L 12/723, H04L 12/715, H04Q 11/00, H04L 12/707, H04J 14/02

(54) **METHOD AND DEVICE FOR RESTORING NETWORK**
VERFAHREN UND VORRICHTUNG ZUR WIEDERHERSTELLUNG EINES NETZWERKS
PROCÉDÉ ET DISPOSITIF POUR RÉTABLIR UN RÉSEAU

(30) Priority: 31.12.2010 CN 201010619965
(43) Date of publication of application: 30.10.2013
(73) Proprietor: Huawei Technologies Co., Ltd., Shenzhen, Guangdong 518129 (CN)
(72) Inventor: LIU, Xinchao, Guangdong 518129 (CN)
(74) Representative: Pfenning, Meinig & Partner GbR
(86) International application number: PCT/CN2011/082249
(87) International publication number: WO 2012/088967

(56) References cited:
- WO-A1-2009/106153
- CN-A- 1 601 965
- CN-A- 101 043 271
- CN-A- 101 188 513
- CN-A- 101 222 364
- CN-A- 101 820 362
- CN-A- 101 883 298
- CN-A- 102 136 940
- US-A1- 2004 107 382
- US-A1- 2005 063 299
- CHOLDA P ET AL: "Recovery and Its Quality in Multilayer Networks", JOURNAL OF LIGHTWAVE TECHNOLOGY, IEEE SERVICE CENTER, NEW YORK, NY, US, vol. 28, no. 4, 15 February 2010 (2010-02-15), pages 372-389, XP011295661, ISSN: 0733-8724

## Description

### FIELD OF THE INVENTION

The present invention relates the technology of recovering from a network fault, and in particular, to a network recovery method and apparatus.

### BACKGROUND OF THE INVENTION

The rapid development of an optical network technology brings nearly unlimited bandwidth and transparent access capability to people. Operators perform optimization and integration on an optical network for an IP (Internet protocol) service, and construct a network that is suitable for the demands of future service development and includes an IP layer and an optical layer, thereby satisfying growing service demands.

The network including the IP layer and the optical layer is a multi-layer network, and devices in the network may be: an SDH (Synchronous Digital Hierarchy, synchronous digital hierarchy) device, a SONET (Synchronous Optical Networking, synchronous optical networking) device, an OTN (Optical Transport Network, optical transport network) device, a CWDM (Coarse Wavelength Division Multiplexing, coarse wavelength division multiplexer), and a DWDM (Denses Wave-Division Multiplexing, dense wave-division multiplexer). When a network fault occurs, recovery may be performed in the IP layer or in the optical layer, or in both the IP layer and the optical layer in coordination.

The prior art has at least the following disadvantages.

When a fault occurs in a network, for example, an optical fiber is cut off, an optical layer LSP (Label Switched Path, label switched path) is interrupted, and at the same time, a corresponding IP link is also interrupted. The affected optical layer LSP may initiate a protection switching operation or a rerouting operation. If the optical layer LSP has no idle resource, recovery may fail when the optical layer LSP performs recovery, which leads to a blocked corresponding IP link. Further, traffic on the IP link may be guided to one or more other IP links, which may cause congestion in other IP links.

WO 2009/106153 Al discloses a method for determining routing for data which is to be transmitted over a multi-layer network, wherein the multi-layer network comprises a first layer and a second layer, and the method comprises determining routing by taking account of available signal transmission/processing resource associated with the first layer and available signal transmission/resource associated with the second layer. The determining routing is implemented in advance of a data flow entering the multi-layer network, and a back-up path for the data traffic is searched from the determined routings after a fault occurring in a working path of the data flow has been detected.

CHOLDA ET AL: "Recovery and Its quality in Multilayer Networks*"* discloses a lot of recovery methods which are applied to a multilayer network, wherein the recovery methods comprise: a single-layer recovery approach, and multilayer recovery methods which comprise: a multilayer recovery without coordination, an escalation strategy, and an integrated multilayer recovery. In the single-layer recovery, recovery procedures are only possible in a single layer of the multilayer networks. In the multilayer recovery without coordination, recovery procedures are implemented in the network's different layers respectively. In the escalation strategy, recovery procedures are triggered in one layer while they are blocked in the other layers, and if the recovery process is not successful, recovery procedures are started in the subsequent layers one by one. In the integrated multilayer recovery, a spare capacity of a path can be carried on unprotected preemtible paths in another layer.

### SUMMARY OF THE INVENTION

An objective of embodiments of the present invention is to provide a network recovery method and apparatus, so as to improve connectivity of a network at the time of recovering from a fault in an optical layer in the network.

An embodiment of the present invention provides a network recovery method, where the method includes:
when a fault occurs in an optical layer of a network, acquiring a network state and available resources of the network; where the available resources include idle resources in the optical layer and in an IP layer, and an intact resource in an optical layer label switched path LSP in which a fault occurs and an intact resource in an IP link corresponding to the LSP;
according to the network state and by using the available resources, computing path information of a new optical layer LSP, a corresponding IP link, and configuration information corresponding to source and destination nodes of the IP link;
instructing a source node of the new optical layer LSP to establish the optical layer LSP according to the path information of the new optical layer LSP; and
after the optical layer LSP is successfully established, instructing the source and destination nodes of the IP link corresponding to the optical layer LSP to establish the IP link, and delivering, to the source and destination nodes, the configuration information corresponding to them, so that the source and destination nodes complete setting by using the configuration information corresponding to them, and implement network recovery.

An embodiment of the present invention further provides an apparatus for recovering an IP over optical network, which includes:
an acquisition module, configured to, when a fault occurs in an optical layer of a network, acquire a network state and available resources of the network; where the available resources include idle resources in the optical layer and in an IP layer, and an intact resource in an optical layer label switched path LSP in which a fault occurs and an intact resource in an IP link corresponding to the LSP;
a computation module, configured to, according to the network state and by using the available resources, compute path information of a new optical layer LSP, a corresponding IP link, and configuration information corresponding to source and destination nodes of the IP link; and
an instruction module, configured to instruct a source node of the new optical layer LSP to establish the optical layer LSP according to path information of the new optical layer LSP; and after the optical layer LSP is successfully established, instruct the source and destination nodes of the IP link corresponding to the optical layer LSP to establish the IP link, and deliver, to the source and destination nodes, the configuration information corresponding to them, so that the source and destination nodes complete setting by using the configuration information corresponding to them, and implement network recovery.

In the network recovery method and apparatus according to the embodiments of the present invention, by using the idle resources in the network and the intact resource in the optical layer LSP in which a fault occurs and the intact resource in the IP link corresponding to the optical layer LSP, the new optical layer LSP and the corresponding IP link are computed, thereby improving connectivity of the network, and reducing influence of the optical layer fault on other IP links.

### BRIEF DESCRIPTION OF THE DRAWINGS

FIG. 1 is a schematic diagram after a fault occurs in a network including an IP layer and an optical layer in the prior art;
FIG. 2 is a schematic flow chart of a first embodiment of a network recovery method according to an embodiment of the present invention;
FIG. 3 is a schematic diagram before network recovery according to an embodiment of the present invention;
FIG. 4 is a schematic diagram after network recovery according to an embodiment of the present invention;
FIG 5A and FIG. 5B are a schematic flow chart of a second embodiment of a network recovery method according to an embodiment of the present invention;
FIG. 6 is a schematic structural diagram of a first embodiment of a network recovery apparatus according to an embodiment of the present invention; and
FIG. 7 is a schematic structural diagram of a second embodiment of a network recovery apparatus according to an embodiment of the present invention.

### DETAILED DESCRIPTION OF THE EMBODIMENTS

To make the foregoing objective, features, and advantages of the present invention more comprehensible, embodiments of the present invention are hereinafter illustrated in further detail with reference to accompanying drawings and specific implementation manners.

When a fault occurs in a network including an optical layer and an IP layer, for example, an optical fiber is cut off, an optical layer LSP is interrupted, and a corresponding IP link is also interrupted. The affected optical layer LSP may initiate a protection switching operation or a rerouting operation. If the optical layer LSP has no idle resource, recovery may fail when the optical layer LSP performs recovery, which leads to a blocked corresponding IP link which disappears from a virtual topology of the IP layer, and traffic on the IP link may be guided to other IP links, which may further cause congestion in other IP links.

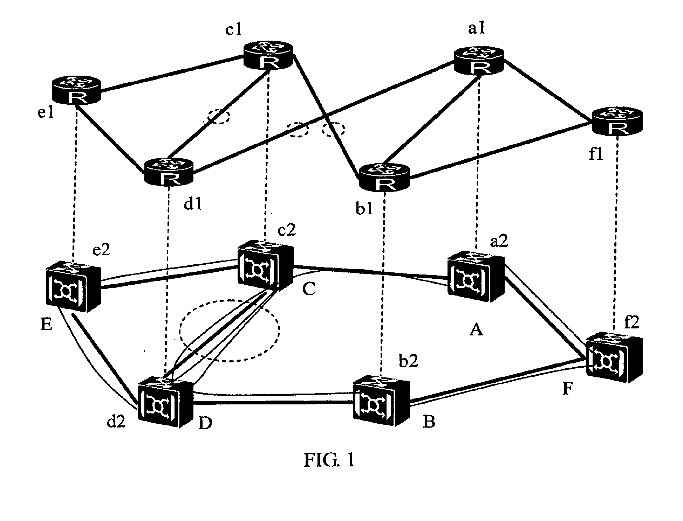

As shown in FIG. 1, IP layer router devices a1, b1, c1, d1, e1 and f1 and optical layer devices a2, b2, c2, d2, e2 and f2 (for example, SDH devices or OTN devices) are disposed in sites A, B, C, D, E and F, respectively. An IP layer router and an optical layer device in each site have a relationship of one-to-one correspondence (for example, the IP layer router c1 and the optical layer device c2 in the site C are in one-to-one correspondence), and an IP layer router and an optical layer device in a same site may be integrated in a same device (for example, the router a1 and the optical layer device a2 in the site A are integrated into one).

An example that the optical layer device is an OTN device is taken for illustration in the following. An IP link e1-c1 is provided by an optical layer LSP e2-c2, an IP link e1-d1 is provided by an optical layer LSP e2-d2, an IP link c1-d1 is provided by an optical layer LSP c2-d2, an IP link a1-f1 is provided by an optical layer LSP a2-f2, an IP link b1-f1 is provided by an optical layer LSP b2-f2, an IP link c1-b1 is provided by an optical layer LSP b2-d2-c2, and an IP link a1-d1 is provided by an optical layer LSP a2-c2-d2, and reference may be made to thin lines as optical layer LSPs in FIG. 1.

If no idle resource exists between sites C and E, sites E and D, sites B and F, or sites A and F (the idle resource herein include an optical fiber of the optical layer, and a board port, wavelength, band and the like on the optical network device, and a board port and the like of the IP layer router), and a optical fiber between the sites C and D is interrupted (a bold line part which is indicated by a larger circle in FIG. 1), which may lead to interruption of three optical layer LSPs, namely, c2-d2, a2-c2-d2, b2-d2-c2, and the three optical layer LSPs are numbered as: L1, L2, and L3, respectively. IP links corresponding to the three optical layer LSPs are also interrupted at the same time: c1-d1, a1-d1, c1-b1 (a part indicated by smaller circles in FIG. 1).

After source nodes of L1, L2, L3 detect fault information, a rerouting operation may be initiated. However, no idle resource exists between the sites C and E, sites E and D, sites B and F, or sites A and F, and recovery fails. Therefore, L1, L2, L3 are interrupted. After an IP layer router detects that an IP link is interrupted, a state update message is published. According to the state update message published by the faulty router, other IP layer routers update local routing information, recompute shortest routes, and refresh routing tables. IP traffic originally passing the interrupted IP link may be forwarded to other IP links according to refreshed routing tables, which easily leads to congestion in other IP links, and then results in a degradation of performance of the IP service. More seriously, if the optical layer fault leads to interruption of multiple IP links, and the recovery is not successful, an isolated IP island may be formed, causing interruption of IP services in the whole network. As for the example in FIG. 1, without the help of other recovery approaches, the isolated IP site may be formed, causing the interruption of the IP service.

Therefore, embodiments of the present invention provide a network recovery method and apparatus as follows, and the method and the apparatus are described in detail with reference to the accompanying drawings.

### Embodiment 1

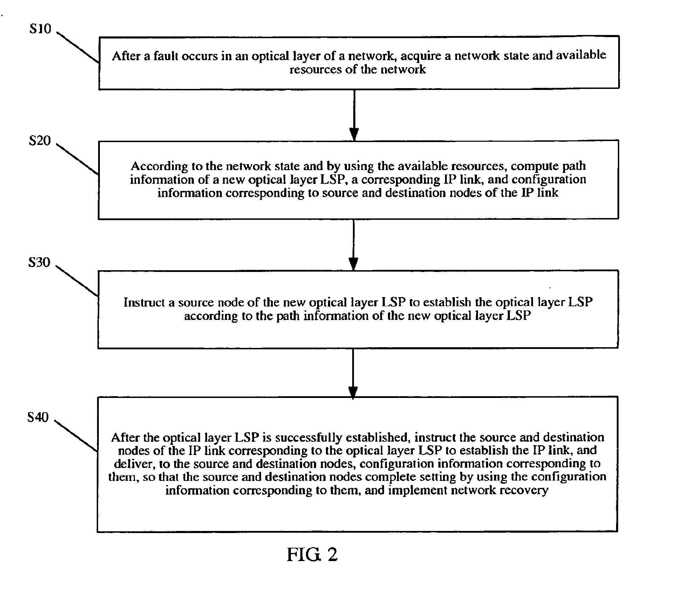

This embodiment provides a network recovery method, and as shown in FIG. 2, the method includes:

S10: When a fault occurs in an optical layer of a network, acquire a network state and available resources of the network.

The network state may include topology information of an IP layer, each connection relationships between sites, and resource usage status of an IP layer router and an optical network device in each site. An optical layer resource may include an optical fiber, wavelength, band and a board port of an optical network device, and an IP layer resource may include a board port of an IP layer router.

The available resources may include idle resources in the optical layer and in the IP layer, and an intact resource in an optical layer LSP in which a fault occurs and an intact resource in an IP link corresponding to the LSP. An idle resource usually is a standby resource on a device. For example, two optical fibers exist between two optical network devices, and in actual use, only one is used, and the other one acts as a standby resource and is in an idle state. When a fault occurs in an optical fiber being used (for example, is cut off), the other standby optical fiber is used to ensure normal communication of the LSP where the faulty optical fiber is located.

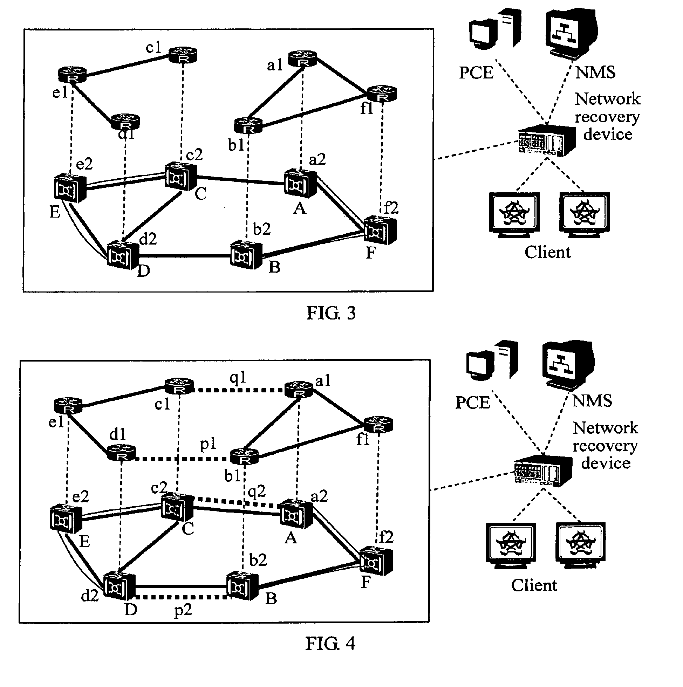

It can be seen from FIG. 3 that, although no idle resource exists on optical layer LSPs corresponding to interrupted IP links c1-d1, a1-d1, and c1-b1, optical fibers between A and C and between B and D, and the board port, wavelength, and band on the optical network device are intact, and board ports corresponding to IP links c1-d1, a1-d1, and c1-b1 on the IP layer router are also intact, which may be used again and are intact resources.

S20: According to the network state and by using the available resources, compute path information of a new optical layer LSP, a corresponding IP link, and configuration information corresponding to source and destination nodes of the IP link.

The configuration information includes IP addresses of the source and destination nodes of the IP link and a Metric value of the IP link, where the Metric value is a cost value of an IP link needed for addressing by a router. When the path information of the new optical layer LSP is computed, a user policy may be further considered. The user policy may include recovering network connectivity, limiting a maximum load ratio of an IP network, optimizing an IP topology structure, and preventing occurrence of an articulation point and a bridge edge. The recovering the network connectivity is to ensure the connectivity of the network to a maximum extent, which is the same as the objective of the embodiment of the present invention. The limiting the maximum load ratio of the IP network is to implement load balance by adjusting the Metric value and creating a new path. The optimizing the IP topology structure, and preventing the occurrence of the articulation point and the bridge edge is to newly establish more than one standby path, so that the network can be connected when a fault occurs.

It may be seen from FIG. 3 that, two optical layer LSPs may still be newly established between A and C and between B and D. IP links corresponding to the newly established optical layer LSPs b2-d2 and a2-c2 are b1-d1 and a1-c1, respectively.

S30: Instruct a source node of the new optical layer LSP to establish the optical layer LSP according to the path information of the new optical layer LSP.

The source node of the optical layer LSP usually refers to the node with a bigger number from a starting point of a service.

S40: After the optical layer LSP is successfully established, instruct the source and destination nodes of the IP link corresponding to the optical layer LSP to establish the IP link, and deliver, to the source and destination nodes, the configuration information corresponding to them, so that the source and destination nodes complete setting by using the configuration information corresponding to them, and implement network recovery.

Referring to FIG. 4, it is assumed that new optical layer LSPs b2-d2 and a2-c2 are p2 and q2 respectively, and then corresponding IP links b1-d1 and a1-c1 are p1 and q1 respectively.

A node d2 is taken as an example, an optical connection exists between d2 and c2 originally, and now an optical connection needs to be established between d2 and b2. Therefore, a cross scheduling function of an OTN is needed, so that d2 and b2 can establish the optical connection successfully. The OTN may complete cross scheduling automatically at the same time when establishment of p2 and q2 is completed.

After the configuration information is set successfully at the source and destination nodes of the IP link corresponding to the optical layer LSP, sites E and F may recover connection in the IP layer by using the IP links p1 and q1, thereby reducing influence of an optical layer fault between sites C and D on other IP links.

If a fault also occurs in the IP layer of the network, the available resources may further include: an intact resource in an IP link in which a fault occurs and an intact resource in an optical layer LSP corresponding to the IP link.

Usually, when a fault occurs in the IP layer, the prior art has a complete IP layer recovery mechanism. The network recovery method in the embodiment of the present invention is used in the IP layer fault recovery, which may further optimize a topology structure of the IP layer.

In the network recovery method in the embodiment of the present invention, by using the idle resources in the network and the intact resource in the optical layer LSP in which a fault occurs and the intact resource in the IP link corresponding to the optical layer LSP, the new optical layer LSP and the corresponding IP link are computed, thereby improving connectivity of the network, and reducing influence of the optical layer fault on other IP links.

### Embodiment 2

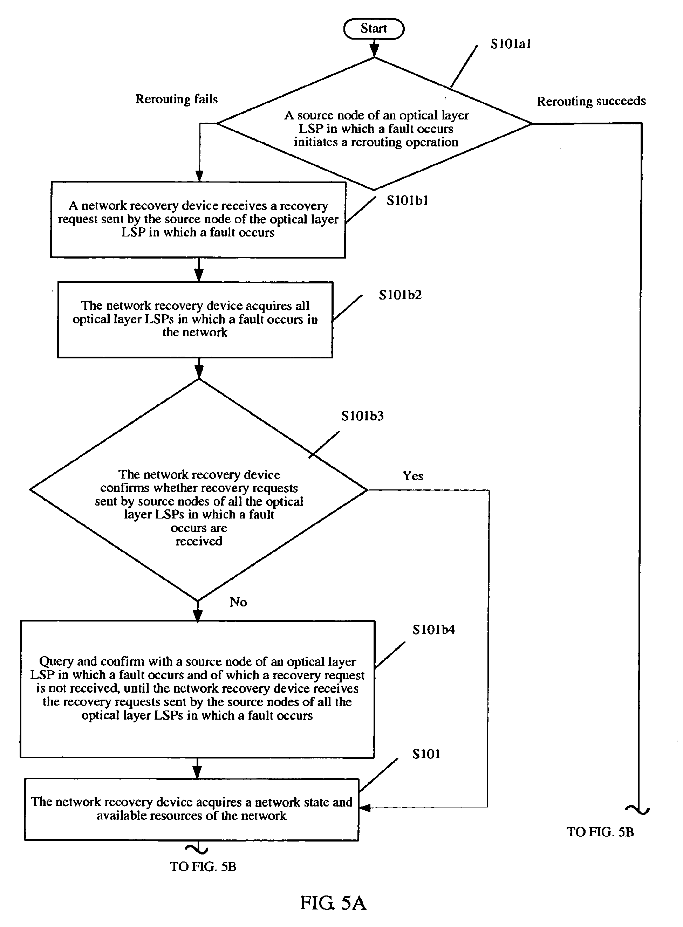

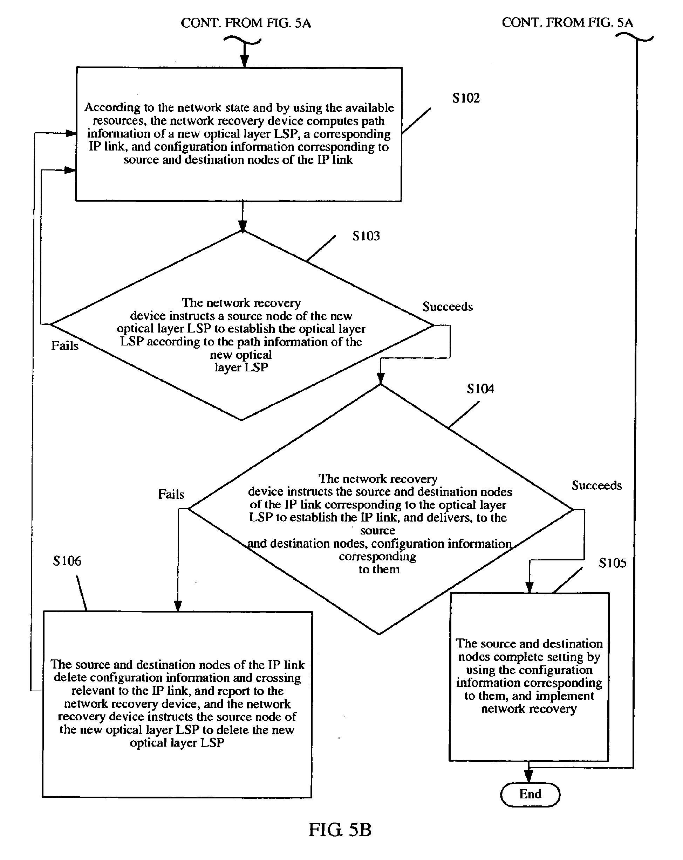

This embodiment provides a network recovery method, as shown in FIG. 5A and FIG. 5B, and includes the following steps.

When a fault occurs in an optical layer of a network, in S101, a network recovery apparatus acquires a network state and available resources of the network.

In the embodiment of the present invention, the network recovery apparatus may be an IPOCE (IP over Optical Computation Element, IP on optical computation element) device, or a PCE (Path Computation Element, computation element) in which the IPOCE function is integrated, an NMS (Network Management System, network management system) or another network element. The available resources include idle resources in the optical layer and in an IP layer and an intact resource in an optical layer LSP in which a fault occurs and an intact resource in an IP link corresponding to the LSP.

The network recovery apparatus may determine the available resources on the network according to locally recorded network information. If the network recovery apparatus is connected to the network, when an optical fiber in the optical layer is interrupted, the network recovery apparatus can know which optical layer LSP is affected. Therefore, if the LSP in which a fault occurs cannot recover successfully, the network recovery apparatus can also know that. In a specific implementation, the network recovery apparatus may be connected to the network, forms an adjacent relationship with another network element in a control plane, and finds routing information of all optical layer LSPs from network elements, PCEs or NMSs of the entire network. In this way, once the optical fiber is interrupted, the network recovery apparatus may know which optical layer LSP is affected.

When the network recovery apparatus receives a recovery request of a source node of the LSP, the network recovery apparatus may query a PCE or an NMS for the available resources on the network.

S102. According to the network state and by using the available resources, the network recovery apparatus computes path information of a new optical layer LSP, a corresponding IP link, and configuration information corresponding to source and destination nodes of the IP link.

During computation of the network recovery apparatus, a user policy may further be considered. The user policy may include recovering network connectivity, limiting a maximum load ratio of an IP network, optimizing an IP topology structure, and preventing occurrence of an articulation point or a bridge edge. As for the embodiment of the present invention, the network connectivity is a condition that is considered first. The network recovery apparatus may compute the new optical layer LSP, according to the user policy and the network state and by using all the available resources, and may also compute the new optical layer LSP by using part of the available resource (that is, an available resource with which an isolated IP site may be eliminated), as long as the user policy is satisfied.

In a computation process, the network recovery apparatus checks, by using a depth-first algorithm, whether the IP layer is connected. If an isolated IP site exists, according to the network state and the user policy of the network, an IP link is added by using available resources and adopting a mapping algorithm of a logic topology and a physical topology, to repair the isolated IP site. The network recovery apparatus may also start, according to a target configured in the user policy, a network optimization algorithm to optimize an IP topology and a corresponding optical layer LSP.

FIG. 4 is still taken as an example, because optical fibers between b2 and d2, and between a2 and c2 in the faulty optical layer LSP are intact, an OUT board port resource of an optical layer LSP which fails in recovery previously may be used to establish new optical layer LSPs p2 and q2, and IP links corresponding to p2 and q2 are p1 and q1, respectively.

S103: The network recovery apparatus instructs a source node of the new optical layer LSP to establish the optical layer LSP according to the path information of the new optical layer LSP.

After the optical layer LSP is successfully established, in S104, the network recovery apparatus instructs the source and destination nodes of the IP link corresponding to the optical layer LSP to establish the IP link, and delivers, to the source and destination nodes, the configuration information corresponding to them.

After the setting is successful, in S105, the source and destination nodes complete setting by using the configuration information corresponding to them, and implement network recovery.

Optionally, before step S101, S101a1 is further included: a source node of the optical layer LSP in which a fault occurs initiates a rerouting operation; if the rerouting fails, the process proceeds to step S101b1 or S101; if the rerouting is successful, it indicates that the optical layer LSP in which a fault occurs recovers successfully, and the recovery operation is ended.

Optionally, before step S101, S101b1 is further included: the network recovery apparatus receives a recovery request sent by a source node of the optical layer LSP in which a fault occurs. As for the example shown in FIG. 4, that is, source nodes c2, a2, b2 of L1, L2, L3 send the recovery request to the network recovery apparatus.

S101b2 may also be included: the network recovery apparatus acquires all optical layer LSPs in which a fault occurs in the network.

Step S101b2 may specifically be that: according to network information recorded by the network recovery apparatus, the network recovery apparatus determines the optical layer LSP in which a fault occurs. As for a network recovery apparatus that has a capability of collecting information from the network, the optical layer LSP in which a fault occurs may be determined according to network information recorded by the network recovery apparatus. Therefore, without the recovery request sent by the source node of the LSP in which a fault occurs, the network recovery apparatus may also monitor whether there is an optical layer LSP in which a fault occurs.

Step S101b2 may further be that: when receiving a recovery request of a certain optical layer LSP, the network recovery apparatus queries the path computation element PCE or the network management system NMS for the optical layer LSP in which a fault occurs. After receiving the recovery request of the optical layer LSP, the network recovery apparatus may query the PCE or the NMS about which optical layer LSP needs recovery.

Preferably, S101b3 may further be included: the network recovery apparatus confirms whether recovery requests sent by source nodes of all optical layer LSPs in which a fault occurs are received; by comparing an optical layer LSP, of which a recovery request is received, with all the optical layer LSPs in which a fault occurs, the network recovery apparatus determines whether the recovery requests sent by the source nodes of all the optical layer LSPs in which a fault occurs are received.

If no, S101b4 is performed: query and confirm with a source node of an optical layer LSP in which a fault occurs and of which a recovery request is not received, until the network recovery apparatus receives the recovery requests sent by the source nodes of all the optical layer LSPs in which a fault occurs, and subsequently step S101 is performed; if yes, step S101 is directly performed.

An case exists, that is, the network recovery apparatus detects that a problem occurs in a certain optical layer LSP, but the optical layer LSP successfully recovers through rerouting and therefore the optical layer LSP does not send a recovery request to the network recovery apparatus; in this case, the network recovery apparatus may confirm with a source node of the optical layer LSP of which the recovery request is not received.

If establishment of the optical layer LSP fails, the method may further include: the network recovery apparatus performs step S102 again.

If the setting fails, S106 may be further included: the source and destination nodes of the IP link delete configuration information and crossing relevant to the IP link, and report to the network recovery apparatus. The network recovery apparatus instructs the source node of the new optical layer LSP to delete the new optical layer LSP, and then performs step S102 again.

The establishment of the optical layer LSP fails and the setting fails, because information obtained by the network recovery apparatus is not synchronous with real-time status of the network, or because a low probability event such as a fault occurs during the establishment of the optical layer LSP or the setting while an optical fiber is intact during computation of the optical layer LSP.

Preferably, after the establishment of the optical layer LSP fails or the setting fails, the method may further include: if the number repeated times of recovery reaches a preset maximum recovery number of times (for example, 10) or the recovery times out (for example, 1 min), the recovery is stopped, and the source nodes c2, a2, b2 of L1, L2, L3 are instructed that the recovery fails, and an operation log and relevant information may further be sent to the NMS for checking; if the number of repeated times of recovery does not reach the preset maximum recovery number of times and the recovery does not time out, step S102 is performed.

After the network recovery apparatus delivers the configuration information to the source and destination nodes of the IP link corresponding to the newly established optical layer LSP, an processing process of IP routers on the source and destination nodes (a processing process of an open shortest path first OSPF router is taken as an example) is as follows:

A router sends an HELLO packet. Two routers share a common data link (an IP link computed and enabled by the network recovery apparatus), and can successfully negotiate with each other on designated parameters in respective HELLO packets, and then the two routers become neighbors (Neighbor).

The router sends an LSA (Link State Advertisement, link state advertisement) to other neighbors of the router.

Routers are expanded to the entire IP layer through the LSA, and all the routers form same link state databases. Each router uses itself as a root, and computes a topology diagram without a loop by using an SPF (shortest-process-first, shortest path first) algorithm, to describe a shortest path for reaching each destination (that is, the minimum path cost) known by the router, and updates a routing and forwarding table according to a computation result.

After the setting is successful, a successfully set IP router (for the example in FIG. 4, d1, b1, c1, a1) publishes a routing update message in the IP layer so that other routers update routing tables, and at the same time, sends a configuration success message to the network recovery apparatus. After the network recovery apparatus receives the configuration success message, the method may further include: the network recovery apparatus sends a recovery success response to the source nodes c2, a2, b2 of L1, L2, L3, and may further send an operation log and relevant information to the NMS for checking.

In the network recovery method in the embodiment of the present invention, by using the idle resources in the network and the intact resource in the optical layer LSP in which a fault occurs and the intact resource in the IP link corresponding to the LSP, the new optical layer LSP and the corresponding IP link are computed, thereby improving connectivity of the network, ensuring normal operation of the IP service and reducing influence of the optical layer fault on other IP links.

### Embodiment 3

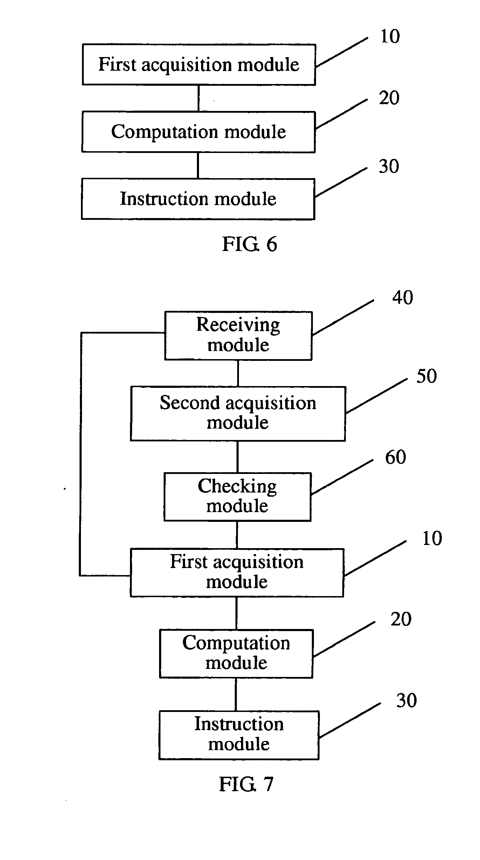

This embodiment provides a network recovery apparatus, which is shown in FIG. 6, including a first acquisition module 10, a computation module 20, and an instruction module 30.

The first acquisition module 10 is configured to, when a fault occurs in an optical layer of a network, acquire a network state and available resources of the network; where the available resources may include idle resources in the optical layer and in an IP layer, and an intact resource in an optical layer LSP in which a fault occurs and an intact resource in an IP link corresponding to the LSP.

If a fault also occurs in the IP layer of the network, the available resources acquired by the first acquisition module 10 may further include: an intact resource in an IP link in which a fault occurs and an intact resource in an optical layer LSP corresponding to the IP link.

The first acquisition module 10 may specifically include:
a first acquisition unit, configured to determine the available resources on the network according to network information recorded by the network recovery apparatus; and/or, a second acquisition unit, configured to query a path computation element or a network management system for the available resources on the network;
a computation module 20, configured to, according to the network state and by using the available resources, compute path information of a new optical layer LSP, a corresponding IP link, and configuration information corresponding to source and destination nodes of the IP link; and
an instruction module 30, configured to instruct a source node of the new optical layer LSP to establish the optical layer LSP according to path information of the new optical layer LSP; and after the optical layer LSP is successfully established, instruct the source and destination nodes of the IP link corresponding to the optical layer LSP to establish the IP link, and deliver, to the source and destination nodes, the configuration information corresponding to them, so that the source and destination nodes complete setting by using the configuration information corresponding to them, and implement network recovery.

The instruction module 30 may further be configured to, when establishment of the optical layer LSP fails, invoke the computation module 20 to again perform the step of computing path information of a new optical layer LSP, a corresponding IP link, and configuration information corresponding to source and destination nodes of the IP link by using the available resources.

The instruction module 30 may further be configured to, when the setting fails, after the source and destination nodes of the IP link delete configuration information and crossing relevant to the IP link, instruct the source node of the new optical layer LSP to delete the new optical layer LSP, and invoke the computation module 20 to again perform the step of computing path information of a new optical layer LSP, a corresponding IP link, and configuration information corresponding to source and destination nodes of the IP link by using the available resources.

Optionally, as shown in FIG. 7, the apparatus further includes: a receiving module 40, configured to receive a recovery request sent by a source node of the optical layer LSP in which a fault occurs.

Optionally, the apparatus may further include:
a second acquisition module 50, configured to acquire all optical layer LSPs in which a fault occurs in the network; and
a checking module 60, configured to confirm whether recovery requests sent by source nodes of all the optical layer LSPs in which a fault occurs; if no, query and confirm with a source node of an optical layer LSP in which a fault occurs and of which a recovery request is not received, until the receiving module 40 receives the recovery requests sent by the source nodes of all the optical layer LSPs in which a fault occurs, and then invoke the first acquisition module 10 to perform the step of acquiring a network state and available resources of the network.

The second acquisition module 50 may specifically include:
a third acquisition unit, configured to determine, according to network information recorded by the network recovery apparatus, the optical layer LSP in which a fault occurs; and/or
a fourth acquisition unit, configured to, after receiving a recovery request of a certain optical layer LSP, query the path computation element or the network management system for the optical layer LSP in which a fault occurs.

In the network recovery apparatus according to the embodiment of the present invention, by using the idle resources in the network and the intact resource in the optical layer LSP in which a fault occurs and the intact resource in the IP link corresponding to the optical layer LSP, the new optical layer LSP and the corresponding IP link are computed, thereby improving connectivity of the network, ensuring normal operation of the IP service and reducing influence of the optical layer fault on other IP links.

Because the apparatus embodiment has many contents similar to those of the method embodiment, the introduction herein is simple, and reference may be made to the method embodiment for relevant parts, which are not described herein again.

Persons of ordinary skill in the art can understand that all or part of the steps of the method in the embodiments of the present invention may be implemented by a program instructing relevant hardware. The program may be stored in a computer readable storage medium, such as a ROM/RAM, a magnetic disk and an optical disk.

It should be noted that the relational terms herein such as first and second are used only to differentiate an entity or operation from another entity or operation, and do not require or imply any actual relationship or sequence between these entities or operations. Moreover, the terms "include", "comprise", and any of their variations are intended to cover a non-exclusive inclusion. Therefore, a process, method, object, or apparatus that includes a series of elements not only includes these elements, but also includes other elements that are not specified expressly, or may include inherent elements of the process, method, object, or apparatus. In a case of no more limitations, an element limited by "include a/an..." does not exclude other same elements existing in the process, the method, the object, or the apparatus which include the element.

What are described above are exemplary embodiments of the present invention, but not intended to limit the protection scope of the present invention.

## Claims

1. A network recovery method, wherein a network comprises an optical layer and an IP layer, and the method comprises:
when a fault occurs in the optical layer of the network, acquiring a network state and available resources of the network; wherein the available resources comprise idle resources in the optical layer and in the IP layer, and an intact resource in an optical layer label switched path LSP in which a fault occurs and an intact resource in an IP link corresponding to the LSP (S10);
according to the network state and by using the available resources, computing path information of a new optical layer LSP, a corresponding IP link, and configuration information corresponding to source and destination nodes of the IP link (S20);
instructing a source node of the new optical layer LSP to establish the optical layer LSP according to the path information of the new optical layer LSP (S30); and
after the optical layer LSP is established successfully, instructing the source and destination nodes of the IP link corresponding to the optical layer LSP to establish the IP link, and delivering, to the source and destination nodes, the configuration information corresponding to them, so that the source and destination nodes complete setting by using the configuration information corresponding to them, and implement network recovery (S40).

2. The method according to claim 1, wherein if a fault also occurs in the IP layer of the network, the available resources further comprise: an intact resource in an IP link in which a fault occurs and an intact resource in an optical layer LSP corresponding to the IP link.

3. The method according to claim 1 or 2, if the setting fails, further comprising:
after the source and destination nodes of the IP link delete configuration information and crossing relevant to the IP link, instructing the source node of the new optical layer LSP to delete the new optical layer LSP, and again perform the step of computing path information of a new optical layer LSP, a corresponding IP link, and configuration information corresponding to source and destination nodes of the IP link.

4. The method according to claim 1, 2 or 3, wherein the acquiring available resources specifically comprises:
determining the available resources on the network according to locally recorded network information; or
querying a path computation element or a network management system for the available resources on the network.

5. A network recovery apparatus, wherein a network comprises an optical layer and an IP layer, and the network recovery apparatus comprises:
an acquisition module (10), configured to, when a fault occurs in the optical layer of the network, acquire a network state and available resources of the network; wherein the available resources comprise idle resources in the optical layer and in the IP layer, and an intact resource in an optical layer label switched path LSP in which a fault occurs and an intact resource in an IP link corresponding to the LSP;
a computation module (20), configured to, according to the network state and by using the available resources, compute path information of a new optical layer LSP, a corresponding IP link, and configuration information corresponding to source and destination nodes of the IP link;
an instruction module (30), configured to instruct a source node of the new optical layer LSP to establish the optical layer LSP according to path information of the new optical layer LSP; and after the optical layer LSP is successfully established, instruct the source and destination nodes of the IP link corresponding to the optical layer LSP to establish the IP link, and deliver, to the source and destination nodes, the configuration information corresponding to them, so that the source and destination nodes complete setting by using the configuration information corresponding to them, and implement network recovery.

6. The apparatus according to claim 5, wherein if a fault also occurs in the IP layer of the network, the available resources acquired by the acquisition module further comprise: an intact resource in an IP link in which a fault occurs and an intact resource in an optical layer LSP corresponding to the IP link.

7. The apparatus according to claim 5 or 6, wherein the instruction module is further configured to, when the setting fails, and after the source and destination nodes of the IP link delete configuration information and crossing relevant to the IP link, instruct the source node of the new optical layer LSP to delete the new optical layer LSP, and invoke the computation module to again perform the step of computing path information of a new optical layer LSP, a corresponding IP link, and configuration information corresponding to source and destination nodes of the IP link.

8. The apparatus according to claim 5, 6 or 7, wherein the acquisition module comprises:
a first acquisition unit, configured to determine the available resources on the network according to network information recorded by the network recovery apparatus; and/or,
a second acquisition unit, configured to query a path computation element or a network management system for the available resources on the network.

## Patentansprüche

1. Netzwiederherstellungsverfahren, wobei ein Netz eine optische Schicht und eine IP-Schicht umfasst und das Verfahren Folgendes umfasst:
wenn ein Fehler in der optischen Schicht des Netzes auftritt, Erfassen eines Netzzustands und verfügbarer Betriebsmittel des Netzes; wobei die verfügbaren Betriebsmittel freie Betriebsmittel in der optischen Schicht und in der IP-Schicht und ein intaktes Betriebsmittel in einem Etikettvermittlungspfad (label switched path, LSP) der optischen Schicht, in dem ein Fehler auftritt, und ein intaktes Betriebsmittel in einer IP-Strecke, die dem LSP entspricht, umfassen (S 10);
gemäß dem Netzzustand und durch Verwenden der verfügbaren Betriebsmittel Berechnen von Pfadinformationen eines neuen LSP der optischen Schicht, einer entsprechenden IP-Strecke und von Konfigurationsinformationen, die Ursprungs- und Zielknoten der IP-Strecke entsprechen (S20);
Anweisen eines Ursprungsknotens des neuen LSP der optischen Schicht, den LSP der optischen Schicht gemäß den Pfadinformationen des neuen LSP der optischen Schicht aufzubauen (S30); und
nachdem der LSP der optischen Schicht erfolgreich aufgebaut ist, Anweisen des Ursprungs- und Zielknotens der IP-Strecke, die dem LSP der optischen Schicht entspricht, die IP-Strecke aufzubauen, und Zustellen zu dem Ursprungs- und Zielknoten der Konfigurationsinformationen, die ihnen entsprechen, so dass der Ursprungs- und Zielknoten das Einstellen durch Verwenden der Konfigurationsinformationen, die ihnen entsprechen, fertigstellen und Netzwiederherstellung implementieren (S40).

2. Verfahren nach Anspruch 1, wobei dann, wenn ein Fehler auch in der IP-Schicht des Netzes auftritt, die verfügbaren Betriebsmittel ferner Folgendes umfassen: ein intaktes Betriebsmittel in einer IP-Strecke, in der ein Fehler auftritt, und ein intaktes Betriebsmittel in einem LSP der optischen Schicht, der der IP-Strecke entspricht.

3. Verfahren nach Anspruch 1 oder 2, das dann, falls das Einstellen fehlschlägt, ferner Folgendes umfasst:
nachdem der Ursprungs- und Zielknoten der IP-Strecke Konfigurationsinformationen und die Kreuzung, die für die IP-Strecke relevant sind, löschen, Anweisen des Ursprungsknotens des neuen LSP der optischen Schicht, den neuen LSP der optischen Schicht zu löschen, und erneutes Ausführen des Schritts des Berechnens von Pfadinformationen eines neuen LSP der optischen Schicht, einer entsprechenden IP-Strecke und von Konfigurationsinformationen, die dem Ursprungs- und Zielknoten der IP-Strecke entsprechen.

4. Verfahren nach Anspruch 1, 2 oder 3, wobei das Erfassen verfügbarer Betriebsmittel insbesondere umfasst:
Bestimmen der verfügbaren Betriebsmittel auf dem Netz gemäß lokal aufgezeichneten Netzinformationen; oder
Abfragen eines Pfadberechnungselements oder eines Netzmanagementsystems nach den verfügbaren Betriebsmitteln auf dem Netz.

5. Netzwiederherstellungsvorrichtung, wobei ein Netz eine optische Schicht und eine IP-Schicht umfasst und die Netzwiederherstellungsvorrichtung Folgendes umfasst:
ein Erfassungsmodul (10), das konfiguriert ist, dann, wenn ein Fehler in der optischen Schicht des Netzes auftritt, einen Netzzustand und verfügbare Betriebsmittel des Netzes zu erfassen; wobei die verfügbaren Betriebsmittel freie Betriebsmittel in der optischen Schicht und in der IP-Schicht und ein intaktes Betriebsmittel in einem Etikettvermittlungspfad, LSP, der optischen Schicht, in dem ein Fehler auftritt, und ein intaktes Betriebsmittel in einer IP-Strecke, die dem LSP entspricht, umfassen;
ein Berechnungsmodul (20), das konfiguriert ist, gemäß dem Netzzustand und durch Verwenden der verfügbaren Betriebsmittel Pfadinformationen eines neuen LSP der optischen Schicht, eine entsprechende IP-Strecke und Konfigurationsinformationen, die Ursprungs- und Zielknoten der IP-Strecke entsprechen, zu berechnen;
ein Anweisungsmodul (30), das konfiguriert ist, einen Ursprungsknoten des neuen LSP der optischen Schicht anzuweisen, den LSP der optischen Schicht gemäß Pfadinformationen des neuen LSP der optischen Schicht aufzubauen; und nachdem der LSP der optischen Schicht erfolgreich aufgebaut ist, den Ursprungs- und Zielknoten der IP-Strecke, die dem LSP der optischen Schicht entspricht, anzuweisen, die IP-Strecke aufzubauen, und zu dem Ursprungs- und Zielknoten die Konfigurationsinformationen, die ihnen entsprechen, zuzustellen, so dass der Ursprungs- und Zielknoten das Einstellen durch Verwenden der Konfigurationsinformationen, die ihnen entsprechen, fertigstellen und Netzwiederherstellung implementieren.

6. Vorrichtung nach Anspruch 5, wobei dann, wenn ein Fehler auch in der IP-Schicht des Netzes auftritt, die durch das Erfassungsmodul erfassten verfügbaren Betriebsmittel ferner Folgendes umfassen: ein intaktes Betriebsmittel in einer IP-Strecke, in der ein Fehler auftritt, und ein intaktes Betriebsmittel in einem LSP der optischen Schicht, der der IP-Strecke entspricht.

7. Vorrichtung nach Anspruch 5 oder 6, wobei das Anweisungsmodul ferner konfiguriert ist, dann, wenn das Einstellen fehlschlägt, und nachdem der Ursprungs- und Zielknoten der IP-Strecke die Konfigurationsinformationen und Kreuzung, die für die IP-Strecke relevant sind, löschen, den Ursprungsknoten des neuen LSP der optischen Schicht anzuweisen, den neuen LSP der optischen Schicht zu löschen, und das Berechnungsmodul aufzurufen, erneut den Schritt des Berechnens von Pfadinformationen eines neuen LSP der optischen Schicht, einer entsprechenden IP-Strecke und von Konfigurationsinformationen, die dem Ursprungs- und Zielknoten der IP-Strecke entsprechen, auszuführen.

8. Vorrichtung nach Anspruch 5, 6 oder 7, wobei das Erfassungsmodul Folgendes umfasst:
eine erste Erfassungseinheit, die konfiguriert ist, die verfügbaren Betriebsmittel auf dem Netz gemäß Netzinformationen, die durch die Netzwiederherstellungsvorrichtung aufgezeichnet sind, zu bestimmen; und/oder eine zweite Erfassungseinheit, die konfiguriert ist, ein Pfadberechnungselement oder
ein Netzmanagementsystem nach verfügbaren Betriebsmitteln auf dem Netz abzufragen.

## Revendications

1. Procédé de rétablissement de réseau dans lequel un réseau comprend une couche optique et une couche au protocole IP, et le procédé comprend :
l'acquisition, lorsqu'un défaut se produit dans la couche optique du réseau, de l'état du réseau et des ressources disponibles du réseau, dans lequel les ressources disponibles comprennent des ressources au repos dans la couche optique et dans la couche au protocole IP, ainsi qu'une ressource intacte dans un trajet commuté par étiquette (LSP) de couche optique dans laquelle un défaut se produit et aussi une ressource intacte dans une liaison au protocole IP correspondant au trajet LSP (S10),
le calcul, en fonction de l'état du réseau et en utilisant les ressources disponibles, d'informations de trajet d'un nouveau trajet LSP de couche optique, d'une liaison correspondante au protocole IP et des informations de configuration correspondant à des noeuds source et de destination de la liaison au protocole IP (S20),
l'ordre à un noeud source du nouveau trajet LSP de couche optique afin qu'il établisse le trajet LSP de couche optique en fonction des informations de trajet du nouveau trajet LSP de couche optique (S30), et
après que le trajet LSP de couche optique a été réglé avec succès, l'ordre aux noeuds source et de destination de la liaison au protocole IP correspondant au trajet LSP de couche optique afin qu'ils établissent la liaison au protocole IP, ainsi que la livraison aux noeuds source et de destination des informations de configuration correspondant à eux-mêmes de telle sorte que les noeuds source et de destination achèvent le réglage en utilisant les informations de configuration correspondant à eux-mêmes et mettent en oeuvre le rétablissement du réseau (S40).

2. Procédé selon la revendication 1, dans lequel, si un défaut se produit également dans la couche au protocole IP du réseau, les ressources disponibles comprennent en outre : une ressource intacte dans une liaison au protocole IP dans laquelle un défaut se produit et une ressource intacte dans un trajet LSP de couche optique correspondant à la liaison au protocole IP.

3. Procédé selon la revendication 1 ou 2, comprenant en outre si le réglage échoue :
l'ordre, après que les noeuds source et de destination de la liaison au protocole IP ont supprimé les informations de configuration et la traversée se rapportant à la liaison au protocole IP, au noeud source du nouveau trajet LSP de couche optique de supprimer le nouveau trajet LSP de couche optique et d'exécuter de nouveau l'étape de calcul des informations de trajet d'un nouveau trajet LSP de couche optique, d'une liaison correspondante au protocole IP et des informations de configuration correspondant à des noeuds source et de destination de la liaison au protocole IP.

4. Procédé selon la revendication 1, 2 ou 3, dans lequel l'acquisition d'es ressources disponibles comprend en particulier :
la détermination des ressources disponibles sur le réseau en fonction d'informations sur le réseau localement enregistrées, ou
la consultation d'un élément de calcul de trajet ou d'un système de gestion de réseau en ce qui concerne les ressources disponibles sur le réseau.

5. Appareil de rétablissement de réseau, dans lequel un réseau comprend une couche optique et une couche au protocole IP, et l'appareil de rétablissement de réseau comprend :
un module d'acquisition (10) configuré pour acquérir, quand un défaut se produit dans la couche optique du réseau, l'état du réseau et des ressources disponibles du réseau, dans lequel les ressources disponibles comprennent des ressources au repos dans la couche optique et dans la couche au protocole IP, ainsi qu'une ressource intacte dans un trajet commuté par étiquette (LSP) de couche optique dans lequel un défaut se produit, et aussi une ressource intacte dans une liaison au protocole IP correspondant au trajet LSP,
un module de calcul (20) configuré pour calculer, en fonction de l'état du réseau et en utilisant les ressources disponibles, des informations de trajet d'un nouveau trajet LSP de couche optique, d'une liaison correspondante au protocole IP et des informations de configuration correspondant à des noeuds source et de destination de la liaison au protocole IP,
un module d'ordres (30) configuré pour ordonner à un noeud source du nouveau trajet LSP de couche optique d'établir le trajet LSP de couche optique en fonction d'informations de trajet du nouveau trajet LSP de couche optique, et après que le trajet LSP de couche optique a été réglé avec succès, il est configuré pour ordonner aux noeuds source et de destination de la liaison au protocole IP correspondant au trajet LSP de couche optique qu'ils établissent la liaison au protocole IP, et pour délivrer, aux noeuds source et de destination, les informations de configuration correspondant à eux-mêmes de telle sorte que les noeuds source et de destination achèvent le réglage en utilisant les informations de configuration correspondant à eux-mêmes et mettent en oeuvre le rétablissement de réseau.

6. Appareil selon la revendication 5, dans lequel, si un défaut se produit également dans la couche au protocole IP du réseau, les ressources disponibles acquises par le module d'acquisition comprennent en outre : une ressource intacte dans une liaison au protocole IP dans laquelle un défaut se produit ainsi qu'une ressource intacte dans un trajet LSP de couche optique correspondant à la liaison au protocole IP.

7. Appareil selon la revendication 5 ou 6, dans lequel le module d'ordres est en outre configuré pour ordonner, lorsque le réglage échoue et après que les noeuds source et de destination ont supprimé les informations de configuration et la traversée se rapportant à la liaison au protocole IP, au noeud source du nouveau trajet LSP de couche optique de supprimer le nouveau trajet LSP de couche optique, et pour demander au module de calcul d'exécuter de nouveau l'étape de calcul des informations de trajet d'un nouveau trajet LSP de couche optique, d'une liaison correspondante au protocole IP et des informations de configuration correspondant aux noeuds source et de destination de la liaison au protocole IP.

8. Appareil selon la revendication 5, 6 ou 7, dans lequel le module d'acquisition comprend :
une première unité d'acquisition, configurée pour déterminer les ressources disponibles sur le réseau en fonction des informations sur le réseau enregistrées par l'appareil de rétablissement de réseau, et/ou
une seconde unité d'acquisition, configurée pour consulter un élément de calcul de trajet ou un système de gestion de réseau en ce qui concerne les ressources disponibles sur le réseau.
